(19) Europäisches Patentamt
European Patent Office
Office européen des brevets

(11) **EP 2 096 461 A1**

(12) **EUROPÄISCHE PATENTANMELDUNG**

(43) Veröffentlichungstag:
**02.09.2009 Patentblatt 2009/36**

(51) Int Cl.:
***G01S 13/84*** *(2006.01)*

(21) Anmeldenummer: **09002801.0**

(22) Anmeldetag: **27.02.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **29.02.2008 DE 102008011819**
**18.04.2008 DE 102008019621**

(71) Anmelder: **Symeo GmbH**
**85579 Neubiberg (DE)**

(72) Erfinder:
• **Gulden, Peter, Dr.**
**80636 München (DE)**
• **Max, Stephan, Dr.**
**38518 Neubokel/Gifthorn (DE)**
• **Vossiek, Martin, Dr.**
**31139 Hildesheim (DE)**

(74) Vertreter: **Schulze, Mark**
**Von Lieres Brachmann Schulze**
**Patentanwälte**
**Grillparzerstrasse 12A**
**81675 München (DE)**

(54) **Messvorrichtung und Messverfahren zur Bestimmung eines Abstands, einer Geschwindigkeit, einer Beschleunigung, eines Rucks, eines Eingangswinkels, einer Eingangswinkelgeschwindigkeit, einer Eingangswinkelbeschleunigung, und/oder eines Eingangswinkelrucks zwischen einer Sende- und Empfangseinrichtung und einem Objekt**

(57) Die Erfindung bezieht sich auf eine Messvorrichtung und ein Messverfahren, bei denen von einer Sende- und Empfangseinrichtung (SA) Signale (so) mit unterschiedlichen Frequenzen (f) zu einem Objekt (O) gesendet und von dem Objekt (O) reflektierte oder zurückgesendete Signale (si) empfangen werden, wobei das gesendete und empfangene Signal so verarbeitet werden, dass ein Abstand (d), eine Geschwindigkeit (v), eine Phase (φ), ein Eingangswinkel ($\gamma_{ein}$), eine Eingangswinkelgeschwindigkeit ($\omega_{ein}$), eine Eingangswinkelbeschleunigung ($\alpha_{ein}$) und/oder ein Eingangswinkelruck ($j_{ein}$) bestimmt wird. Dann wird erstens durch insbeson-dere Differenzbildung mehrerer Messungen der Phasen als einer Messgröße die Phasengeschwindigkeit (ω), die Phasenbeschleunigung (α) und/oder den Phasenruck (j) als zumindest eine Berechnungsgröße berechnet, zwei-tens zumindest eine dieser Berechnungsgrößen durch eine Umformung in z.B. die radiale Geschwindigkeit ($v_{\omega}$) oder den Eingangswinkelruck ($j_{ein}$) in Bezug zu der ge-messenen Größe als Bezugsgröße gestellt und drittens eine Kombination der Bezugsgrößen und der Berech-nungsgrößen zur Ermittlung einer Integrationskonstante durchgeführt, welche bei einer Rückintegration z.B. der Phasengeschwindigkeit (ω) eingesetzt wird.

Fig. 1

Fig. 2

**Beschreibung**

Messvorrichtung und Messverfahren zur Bestimmung eines Abstands, einer Geschwindigkeit, einer Beschleunigung, eines Rucks, eines Eingangswinkels, einer Eingangswinkelgeschwindigkeit, einer Eingangswinkelbeschleunigung, und/oder eines Eingangswinkelrucks zwischen einer Sende- und Empfangseinrichtung und einem Objekt

Die Erfindung bezieht sich auf eine Messvorrichtung und ein Messverfahren zur Bestimmung eines Abstands, einer Geschwindigkeit, einer Beschleunigung, eines Rucks oder einer entsprechenden Winkelgröße dazu.

Stand der Technik

Lokale Positionierungssysteme bestehen üblicherweise aus Basisstationen und Transpondern. Dabei sendet der Transponder zyklisch Signale aus, welche von den Basisstationen empfangen werden können. Durch die Analyse von Laufzeitdifferenzen der empfangenen Signale und der bekannten Transponderposition wird die aktuelle Position der Basisstation berechnet. Nachteilig an dieser Lösung ist die erforderliche hochgenaue Synchronisierung aller Transponder, was zusätzliche kostenintensive Hintergrundnetzwerke erforderlich macht. Des Weiteren müssen zur Bildung bzw. zur Bestimmung der Laufzeitdifferenz stets die Signale mehrerer Transponder empfangen werden.

Eine Weiterentwicklung stellt das lokale Positionsmesssystem dar, welches in DE 103 36 084 A1 beschrieben ist. Dabei sendet die Basisstation ein Signal aus, welches von den Transpondern empfangen und zur Basisstation zurück geschickt wird. Vorteilhaft ist, dass die Basisstation durch das Aussenden des Signals den Zeitpunkt der Messung selbst bestimmt. Dadurch ist die Synchronisierung der Transponder nicht mehr erforderlich.

Grundlage der lokalen Positionsmesssysteme ist das so genannte frequenzmodulierte Dauerstrichradar (FMCW). Dabei sendet die Basisstation ein frequenzmoduliertes Signal aus, welches von dem Transponder moduliert, verstärkt und zurück gesendet wird. Die Basisstation empfängt das Signal und mischt dies mit dem aktuell versendeten Signal. Das Ergebnis dieser Mischung sind vier Signalanteile mit unterschiedlichen Frequenzen, welche von der Modulationsfrequenz des Transponders, der Trägerfrequenz der FMCW-Modulation sowie dem Abstand zwischen der Basisstation und dem Transponder abhängen. Durch eine Tiefpassfilterung werden die zwei hochfrequenten Signalanteile unterdrückt. Die übrigen beiden Signalanteile werden durch eine Fouriertransformation in Spektralanteile zerlegt. Durch die dann messbare Frequenzdifferenz der beiden Signalanteile im Betragsspektrum kann ein direkter Rückschluss auf den radialen Abstand und die radiale Geschwindigkeit zwischen der Basisstation und dem Transponder vollzogen werden.

Bisherige Lösungen werten nur den Betrag des eingehenden Signals zur Abstandsbestimmung aus, wodurch die Genauigkeit auf ca. 10 cm limitiert ist.

Das bekannte zu Grunde liegende frequenzmodulierte Dauerstrichradar (FMCW: Frequency Modulated Continuous Wave) steht exemplarisch für die Verwendung eines Radarssystems, welches den Abstand und die Geschwindigkeit zwischen Basisstation und Reflektor oder Transponder schätzen. Neben Systemen auf Basis beliebiger Frequenzmodulationsarten, Bandbreiten und Trägerfrequenzen sind auch Systeme bekannt, welche schrittweise konstante Frequenzenverschiebungen (FSCW: Frequency Stepped Continuous Wave) oder parallel unterschiedliche Frequenzen (Heterodyn Empfänger) verwenden.

Eine genauere Beschreibung der möglichen Radarsysteme ist in H. Rohling und M. Meinecke: "Waveform Design Principles for Automotive Radar Systems", CIE Internaltional Conference on Radar, Beijing, China, 2001 zu finden. Dabei werden insbesondere der radiale Abstand $d$ und die radiale Geschwindigkeit $v$ unter Berücksichtigung der Dopplerverschiebung für die weiteren Betrachtungen benötigt:

$$d = \frac{(\Delta F_{up} + \Delta F_{down}) \cdot c \cdot T_s}{2 \cdot B} \tag{1}$$

$$v = \frac{(\Delta F_{down} - \Delta F_{up}) \cdot c \cdot T_s}{2 \cdot B}. \tag{2}$$

Die Dopplerverschiebung ergibt sich aus der gemessenen Frequenzdifferenz $\Delta F_{down}$ und $\Delta F_{up}$, der Lichtgeschwindigkeit $c$, der Zeitdauer der FMCW/FSCW-Rampe $T$ und der Bandbreite der Rampe $B$.

Das FMCW/FSCW-Radar kann sowohl in primären als auch in sekundären Radarsystemen eingesetzt werden. Der wesentliche Unterschied zwischen den Radartypen ist die Ausführung des Zieles. Bei einem Primärradar finden am Ziel passive Reflexionen statt, während beim sekundären Radar das Ziel mit Transpondern ausgestattet ist, welche das eingehende Signal empfangen, ggf. kodieren und verstärkt zurücksenden.

Bei einem Primärradar kann die Phase gemessen werden. Dabei reflektieren die Ziele passiv. Daher kann von einer kohärenten Phasenmessung ausgegangen werden, so dass eine komplexe Signalverarbeitung, in Analogie zu einem sekundären Radar nicht erforderlich ist.

Das direkte Messen der Phase ist bei dem sekundären Radar im Gegensatz zum primären Radar nicht möglich, da der Transponder das Signal mit einem unbekannten Phasenterm moduliert. In FMCW/FSCW-Sekundärradarsystemen wird ein gemessenes Echoprofil im Frequenzbereich ausgewertet. Hier finden sich zwei Signalanteile, welche im Betragspektrum symmetrisch um die Modulationsfrequenz des Transponders angeordnet sind. Durch die komplex konjugierte Multiplikation beider Spektralanteile ist es möglich, diese so zu kombinieren, dass die unbekannte Modulationsphase des Transponders eliminiert wird, und eine Phasenkohärenz analog zum Primärradar vorliegt. Eine genauere Herleitung des Verfahrens findet sich in M. Vossiek, A. Urban, S.Max, P. Gulden: "Inverse Synthetic Aperture Secondary Radar Concept for Precise Wireless Positioning", IEEE Transaction on Microwave Theory and Techniques, vol. 55, pp. 2447-2453, 2007. Das entfernungsabhängige Ergebnisspektrum ergibt sich zu:

$$e(d) = A_i \cdot \left| W\left(d - d_i - d_0\right) \right| \cdot e^{j\Psi \cdot d_i},$$
$$\varphi(d) = \Psi \cdot d_i. \tag{3}$$

Dabei stellt e(d) ein entfernungsabhängiges Echoprofil dar. Dabei wird dem variablen Entfernungswert d ein Amplitudenwert e(d) zugeordnet, das von einem Objekt oder Transponder i im Abstand $d_i$ gemessen wird, und $A_i$ die Empfangsamplitude. Ein konstanter Faktor $\Psi$ multipliziert mit dem Abstand $d_i$ ergibt die gesuchte kohärente Phase. Der Faktor $d_0$ steht ferner für einen unbekannten Offset, welcher die Ausführung des Transponders berücksichtigt.

Die Phase kann alternativ auch mittels der Trägerfrequenz $\omega_c$, dem Abstand $d_i$ und der Lichtgeschwindigkeit c bestimmt werden, wobei sich ein Proportionalitätsfaktor in Abhängigkeit des verwendeten Radarsystems ergibt gemäß

$$\varphi(d) \sim \frac{\omega_c}{c} d_i. \tag{4}$$

Alternativ kann dafür auch die Phase von Trägerfrequenzen anderer Modulationsverfahren oder die Phase der Hüllkurve von Modulationsarten, z.B. PN Kodierung verwendet werden.

Es ist zum Bestimmen eines Eingangswinkels $\gamma_{ein}$ zwischen einerseits zwei Sende- und Empfangseinrichtungen $SA_i$ und andererseits einem Objekt allgemein bekannt, dass mit mindestens zwei primären oder sekundären neben der bereits beschriebenen Entfernungsbestimmungen des Abstands $d_i$ zu einem Objekt auch der Eingangswinkel $\gamma_{ein}$ zwischen der Position des Objektes O und der Geraden, welche durch die Sende- und Empfangseinrichtungen $SA_i$ läuft, durch Differenzierung der gemessenen Abstände $d_i$ und trigonometrische Beziehungen berechnet werden kann.

Eine 2D Ortung wird entweder mit einer Sende- und Empfangseinrichtung mit mindestens zwei Antennen oder mit zwei Sende- und Empfangseinrichtungen $SA_1$ und $SA_2$, welche jeweils einen Abstand $d_1(n)$ und $d_2(n)$ zu dem Objekt haben, ausgeführt. Eine Abstandsdifferenz $\Delta d_a(n)$ zwischen den Abständen $d_1(n)$ und $d_2(n)$ bestimmt sich beispielhaft zu

$$\Delta d_a(n) = d_1(n) - d_2(n). \tag{5}$$

Über Trigonometrie lässt der Eingangswinkel $\gamma_{ein}(n)$ berechnen zu

$$\gamma_{ein}(n) = \arccos\left(\frac{\Delta d_a}{d_{SA1SA2}}\right) \tag{6}$$

mit $d_{SA1SA2}$ als Abstand zwischen den Antennen bzw. den Sende-und Empfangseinrichtungen $SA_1$ und $SA_2$.

Werden mehrere Eingangswinkel $\gamma_{ein}(n)$ in Folge gemessen, kann durch Differenzbildung eine Eingangswinkelgeschwindigkeit $\omega_{ein}(n)$, eine Winkelbeschleunigung $\alpha_{ein}(n)$ und ein Eingangswinkelruck $j_{ein}(n)$ bestimmt werden.

Gemäß den Umgebungsbedingungen werden die Abstandsmessungen $d_i$ verfälscht, so dass gerade bei kleinem Abstand $d_{SA1SA2}$ zwischen den Antennen bzw. den Sende- und Empfangseinrichtungen $SA_1$ und $SA_2$ eine hohe Ungenauigkeit in der Bestimmung des Winkels $\gamma_{ein}(n)$ zu erwarten ist.

Die vollständige Positionsbestimmung eines Objektes $O$ wird in klassischen FMCW/FSCW Ortungssystemen üblich weise durch eine Kombination von gemessenen Abständen $d_i$ von mehreren Antennen bzw. Sende- und Empfangseinrichtungen $SA_i$ zu dem Objekt mittels Multilateration geortet.

Befinden sich die Antennen bzw. Sende- und Empfangseinrichtungen in einer ungünstigen Anordnung zu am Objekt befindlichen Reflektoreinheiten bzw. Reflexionsstellen, so führt dies zu hohen Unsicherheiten in der Positionsbestimmung. Als ungünstig werden Anordnungen bezeichnet, welche einen sehr kleinen oder einen Winkel von 180˚ zwischen dem Objekt $O$ und den zumindest zwei Sende- und Empfangseinrichtungen besitzen.

Die Aufgabe der Erfindung besteht darin, ein Messergebnis von Abstand $d$, Geschwindigkeit $v$, Beschleunigung $a$ und/oder eines Rucks $j$ und/oder einen Eingangswinkel $\gamma_{ein}$ , eine Eingangswinkelgeschwindigkeit $\omega_{ein}$, eine Eingangswinkelbeschleunigung $\alpha_{ein}$ und/oder einen Winkelruck $j_{ein}$ zwischen zumindest zwei Objekten $O_i$ genauer zu bestimmen und gewonnenen Messwerte zu einer vollständigen Positionsbestimmung zusammenzuführen. Insbesondere soll eine Position des einen Objektes $O$ gegenüber dem anderen Objekt durch die derart gewonnenen Messwerte so bestimmt werden, dass neben einer deutlichen Genauigkeitssteigerung auch unter ungünstigen Anordnungen eine Unsicherheit der Positionsbestimmung konstant bleibt.

Diese Aufgabe wird gelöst durch ein Messverfahren bzw. eine Messvorrichtung gemäß den Ansprüchen 1 bzw. 7. Vorteilhafte Ausgestaltungen sind Gegenstand abhängiger Ansprüche.

Bevorzugt wird ausgegangen von einer Messvorrichtung mit einer Sende- und Empfangseinrichtung zur Bestimmung eines Abstands, einer Geschwindigkeit, einer Beschleunigung und/oder eines Rucks, eines Eingangswinkels, einer Eingangswinkelgeschwindigkeit und/oder einer Eingangswinkelbeschleunigung und/oder einem Eingangswinkelruck zwischen zumindest einer Sende- und Empfangseinrichtung und zumindest einem Objekt, wobei die Sende- und Empfangseinrichtung so ausgestaltet und/oder gesteuert ist, dass sie Signale mit unterschiedlichen Frequenzen zu einem Objekt und/oder einem als Transponder ausgebildeten Objekt sendet, und von dem Objekt passiv reflektierte Signale, und/oder aktive durch einen Transponder verstärkte Signale und/oder aktive durch einen Transponder modulierte Signale empfängt, wobei die Messvorrichtung das gesendete Signale und das empfangene Signal so verarbeitet, dass der Abstand, die Geschwindigkeit und/oder die Phase, der Eingangswinkel, die Eingangswinkelgeschwindigkeit die Eingangswinkelbeschleunigung und/oder der Eingangswinkelruck bestimmt oder gemessen wird. Vorteilhaft wird dies dadurch, dass die Messvorrichtung ausgelegt und/oder gesteuert ist,

a1) durch Differenzbildung mehrerer Messungen der Phasen als einer Messgröße die Phasengeschwindigkeit, die Phasenbeschleunigung und/oder den Phasenruck als zumindest eine Berechnungsgröße zu berechnen,

a2) und/oder durch eine Differenzbildung mehrerer Messungen und/oder Berechnungsgrößen zwischen zumindest zwei Sende- und Empfangseinrichtungen und/oder zumindestens zwei Antennen als zumindest eine Berechnungsgröße zu berechnen,

b1) zumindest eine dieser Berechnungsgrößen durch eine Umformung in die radiale Geschwindigkeit, die radiale Beschleunigung, den radialen Ruck, die Eingangswinkelgeschwindigkeit, die Eingangswinkelbeschleunigung und/oder den Eingangswinkelruck in Bezug zu dem gemessenen Abstand, zu der gemessenen Geschwindigkeit, zu dem gemessenden Differenzabstand und/oder zu der gemessenen Differenzgeschwindigkeit als Bezugsgrößen zu stellen

b2) und/oder den gemessenen Abstand, die gemessene Geschwindigkeit, den gemessenen Differenzabstand und/oder die gemessenen Differenzgeschwindigkeit als einer Messgröße durch eine Umformung in den Phasenzustand, die Phasengeschwindigkeit, die Phasenbeschleunigung, den Eingangswinkel, die Eingangswinkelgeschwindigkeit und/oder die Eingangswinkelbeschleunigung in Bezug zu einer der Berechnungsgrößen als Bezugsgrößen zu stellen, und

c) eine Kombination der Bezugsgrößen und/oder der Berechnungsgrößen zur Ermittlung von zumindest einer Integrationskonstante zu verwenden, welche bei einer Rückintegration der Phasengeschwindigkeit, der Phasenbeschleunigung, des Phasenrucks, der Eingangswinkelgeschwindigkeit, der Eingangswinkelbeschleunigung und/oder des Eingangswinkelrucks einsetzbar ist. Eigenständig vorteilhaft ist ein Verfahren, welches in einem Prozessor oder einer Messvorrichtung entsprechende Vervahrensschritte durchführt.

Bevorzugt werden ein Verfahren oder eine solche Vorrichtung, die ausgelegt und/oder gesteuert sind, den gemessenen Abstand und die gemessene Geschwindigkeit zur Erweiterung eines Eindeutigkeitsbereichs der Phasengeschwindigkeit, der Phasenbeschleunigung, des Phasenrucks, der Eingangswinkelgeschwindigkeit, der Eingangswinkelbeschleunigung und/oder des Eingangswinkelrucks zu verwenden.

Bevorzugt werden ein Verfahren oder eine solche Vorrichtung, die ausgelegt und/oder gesteuert sind, ein Vorhandensein einer Sichtverbindung zwischen der Sende- und Empfangseinrichtung und dem passiv reflektierenden Objekt oder dem aktiv zurücksendenden Transponder durch einen Vergleich zwischen der Phasenmessung und der Abstandsmessung bzw. der Geschwindigkeitsmessung zu überprüfen.

Bevorzugt werden ein Verfahren oder eine solche Vorrichtung, die ausgelegt und/oder gesteuert sind, eine statistische Auswertung der berechneten Phasengeschwindigkeit, Phasenbeschleunigung und/oder des Phasenrucks zur Ermittlung von Bewegungsformen, insbesondere Stillstand, linearer Bewegung und/oder linearer Beschleunigung zu verwenden.

Bevorzugt werden ein Verfahren oder eine solche Vorrichtung, die ausgelegt und/oder gesteuert sind, eine statistische Auswertung der berechneten Eingangswinkelgeschwindigkeit, Winkeleingangsbeschleunigung und/oder des Winkeleingangsrucks zur Ermittlung von Bewegungsformen, insbesondere Stillstand, Rotation und/oder Rotationsbeschleunigung zu verwenden.

Bevorzugt werden ein Verfahren oder eine solche Vorrichtung, die ausgelegt und/oder gesteuert sind, eine Position des Transponders aus zumindest einem solchen radialen Abstand und zumindest einem solchen Eingangswinkel zwischen dem Transponder und den zwei Sende- und Empfangseinrichtungen zu bestimmen.

Nachfolgend werden Ausführungsbeispiele anhand der Zeichnung näher erläutert. Es zeigen:

Fig. 1    eine Station eines Primärradarsystems, welche über zwei Antennen mit einem entfernten Objekt kommuniziert,

Fig. 2    eine derartige Anordnung eines Sekundärradarsystems und

Fig. 3    eine weitere Anordnung eines Sekundärradarsystems, bei welchem zwei Sende- und Empfangseinrichtungen mit einem Objekt kommunizieren.

Beschrieben werden eine Vorrichtung und ein Verfahren zur Positions-, Geschwindigkeits- und/oder Beschleunigungsbestimmung, insbesondere unter Verwendung des komplexen Spektrums eines primären und/oder sekundären FMCW/FSCW Radars. Ausgegangen wird von einer mindestens zweifach wiederholten FMCW/FSCM-Messung mit der Messfrequenz $f_M$ der beschriebenen Größen aus den Gleichungen (1), (2), (3) und (4) als Grundlage für ein bevorzugtes Verfahren, mit welchem absolute Abstände und Geschwindigkeiten sowie die proportionalen Phasen bestimmt werden. Gemessen wird dabei jeweils zwischen einer Basisstation und einem passiv reflektierenden Objekt bzw. einem Transponder, welcher sich an einer fixen Position oder einem beweglichen Objekt befindet.

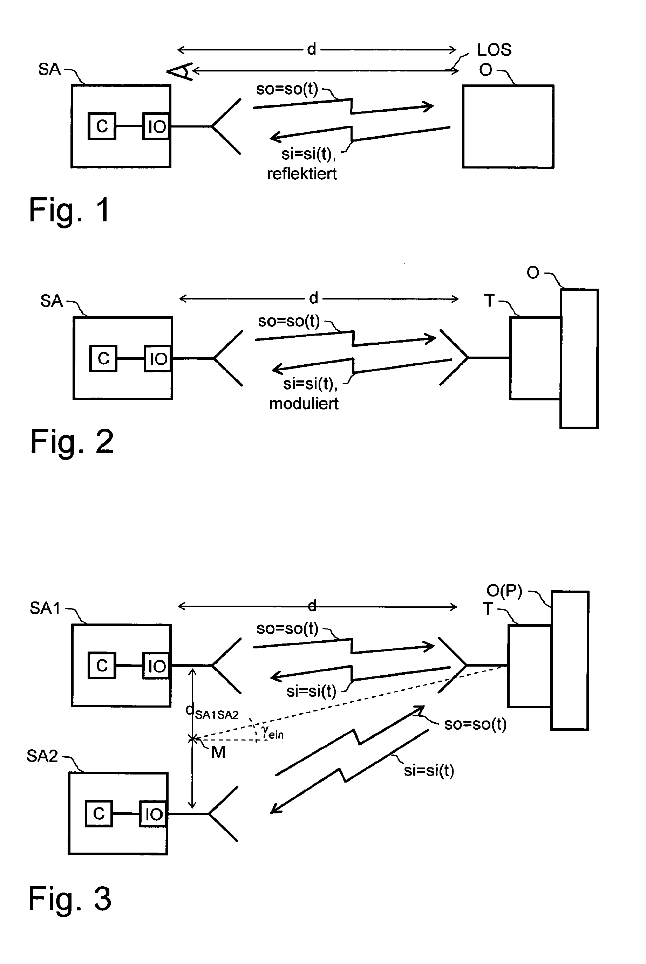

Zwei vorteilhafte Anordnungen von Vorrichtungen und zwischen diesen verlaufenden Signalen werden nachfolgend beispielhaft beschrieben. In der ersten Anordnung nach Fig. 1 wird ein Primärradar verwendet. Dabei wird mit einer Sende- und Empfangseinrichtung $SA$ über eine oder mehrere Antennen ein Signal so = $s_{out}(t)$ ausgesendet, welches auf ein reflektierendes Objekt O trifft. Das Objekt O reflektiert das von der Sende- und Empfangseinrichtung gesendete Signal so als reflektiertes Signal zu der Sende- und Empfangseinrichtung SA zurück, welche das reflektierte Signal als Empfangssignal si = si(t) empfängt.

In der zweiten Anordnung nach Fig. 2 wird ein Sekundärradar verwendet. Dabei wird ebenfalls mit einer Sende- und Empfangseinrichtung $SA$ über eine oder mehrere Antennen ein Signal so = $s(t)$ ausgesendet, welches auf einen Transponder $T$ trifft. Der Transponder T kann an einem beweglichen Objekt oder einem Referenzpunkt befestigt sein. Der Transponder T empfängt das gesendete Signal so und verstärkt und/oder moduliert dieses. Nachfolgend sendet der Transponder T das verstärkte und/oder modulierte Signal zur Sende- und Empfangseinrichtung $SA$ über eine oder mehrere Antennen zurück. Das zurückgesendete Signal si wird von der Sende- und Empfangseinrichtung $SA$ als Empfangssignal si = si(t) über eine oder mehrere Antennen empfangen. Dabei befinden sich das Objekt O bzw. der Transponder T aus Sicht eines Koordinatensystems der Sende- und Empfangseinrichtung $SA$ unter einem Winkel $\gamma_{ein}(n)$ und bewegen sich mit einer Winkelgeschwindigkeit $\omega_{ein}(n)$ und einer Winkelbeschleunigung $\alpha_{ein}(n)$.

Fig. 3 zeigt eine weitere Anordnung eines Sekundärradarsystems, bei welchem zwei Sende- und Empfangs-einrichtungen $SA_1$, $SA_2$ mit einem Objekt $O$ bzw. einem daran angeordneten Transponder $T$ kommunizieren. Die zwei Sende- und Empfangseinrichtungen können auch als eine Sende-und Empfangseinrichtung mit zwei getrennten Antennen ausgeführt werden. Im wesentlichen sind die hier beschriebenen Verfahrensweisen in allen diesen verschiedenen Ausgestaltungen umsetzbar.

Durch die Betrachtungen der Differenzen zwischen mehreren Messungen, welche mit einer Messfrequenz $f_M$ aufgenommen werden, ergibt sich eine Phasengeschwindigkeit $\omega_i$, eine Phasenbeschleunigung $\alpha_i$ und ein Phasenruck $j_i$ gemäß

$$\omega_i = (\varphi_i - \varphi_{i+1}) \cdot f_M,$$
$$\alpha_i = (\omega_i - \omega_{i+1}) \cdot f_M, \tag{7}$$
$$j_i = (\alpha_i - \alpha_{i+1}) \cdot f_M.$$

Mit den gemessenen Phasen $\varphi_1$, $\varphi_2$, $\varphi_3$, und $\varphi_4$ ergeben sich so beispielsweise die Winkelgeschwindigkeiten $\omega_1$, $\omega_2$ und $\omega_3$ die Winkelbeschleunigungen $\alpha_1$ und $\alpha_2$ sowie der Winkelruck $j_1$ gemäß

$$\omega_1 = (\varphi_1 - \varphi_2) \cdot f_M,$$
$$\omega_2 = (\varphi_2 - \varphi_3) \cdot f_M,$$
$$\omega_3 = (\varphi_3 - \varphi_4) \cdot f_M,$$
$$\alpha_1 = (\omega_1 - \omega_2) \cdot f_M, \tag{8}$$
$$\alpha_2 = (\omega_2 - \omega_3) \cdot f_M,$$
$$j_1 = (\alpha_1 - \alpha_2) \cdot f_M.$$

Als Eindeutigkeitsbereich $\lambda$ wird der Bereich eines Messsignals bezeichnet, in welchem der Messwert genau einem Zustand zugeordnet werden kann. Die Phasenmessung $\varphi$ ist bei der Verwendung von einer Wellenlänge nur innerhalb einer Periode eindeutig. Wird dieser Eindeutigkeitsbereich $\lambda$ Bereich verlassen, so entstehen Doppeldeutigkeiten. D.h. die Messung kann mehreren Zuständen zugeordnet werden. Der Eindeutigkeitsbereich $\lambda$ der einzelnen Differenzmessungen wird bestimmt zu

$$\lambda_\varphi = \frac{c}{\omega_C} \cdot \frac{1}{4},$$
$$\lambda_\omega = \frac{\lambda_\varphi}{1/f_M},$$
$$\lambda_\alpha = \frac{\lambda_\varphi}{(1/f_M)^2}, \tag{9}$$
$$\lambda_j = \frac{\lambda_\varphi}{(1/f_M)^3}.$$

Gemäß den Formeln (9) wird der Eindeutigkeitsbereich $\lambda$ mit dem Grad der Differenzierung und mit zunehmender Abtastfrequenz vergrößert. Um die Größen $\omega_i$, $\alpha_i$ und $j_i$ auf Entfernungsmaße zurückzuführen, müssen die Größen gemäß dem Grad der Differenzierung integriert werden. Daher ergibt sich der bekannte Zusammenhang zwischen dem Phasenruck, der Phasenbeschleunigung, der Phasengeschwindigkeit und der Phase zu im Allgemeinen zu:

$$\alpha(t) = \int_0^t j(t)dt + \alpha_0,$$
$$\omega(t) = \int_0^t \alpha(t)dt + \omega_0, \tag{10}$$
$$\varphi(t) = \int_0^t \omega(t)dt + \varphi_0.$$

Für den diskreten realen Fall werden die Summen gebildet, wie später noch genauer ausgeführt wird. Die

Integrationskonstanten $\alpha_0$, $\omega_0$ bzw. $\varphi_0$ sind dabei unbekannt. Somit steht dem Vorteil des großen Eindeutigkeitsbereichs $\lambda$ bei einer Steigerung des Differenzierungsgrades eine Erhöhung von unbekannten Integrationskonstanten $\alpha_0$, $\omega_0$ bzw. $\varphi_0$ gegenüber.

Um diese unbekannten Integrationskonstanten $\alpha_0$, $\omega_0$ bzw. $\varphi_0$ zu schätzen und/oder den Eindeutigkeitsbereich $\lambda$ der Phasenmessungen zu erweitern, wird gemäß dem bevorzugten Verfahren die oben beschriebene klassische FMCW/FSCW-Auswertung verwendet. Diese kann auf zwei Arten genutzt werden:

Zum ersten können die Integrationskonstanten in einem iterativen Prozess bestimmt werden. Dabei kann auf bekannte statistische Filter, z.B. affine Kombination, Kalmanfilter oder Partikelfilter zurückgegriffen werden.

Zum zweiten kann mittels der absoluten FMCW/FSCW-Messung die Überschreitung des Eindeutigkeitsbereiches $\lambda$ der Messung aufgehoben werden. Diese Überschreitung wird durch absolute Messwert des Abstandes $d$ und der Geschwindigkeit $v$ hinreichend genau erkannt und verschiebt entsprechend des Eindeutigkeitsbereiches $\lambda$ die Phasendifferenzmessung.

Diese Kombination vergleichsweiser ungenauen klassischen Abstands- $d$ / und Geschwindigkeitsmessung $v$ ermöglicht, dass die Eindeutigkeit der FMCW/FSCW-Messung und die hohe Genauigkeit der Phasenmessung erhalten bleibt.

Zur Kombination werden nachfolgend drei Verfahren vorgeschlagen, welche sich durch einen unterschiedlichen Grad der Differenzierung mehrerer Phasenmessungen $\varphi$ unterscheiden. Entsprechend der Messaufgabe können der erforderliche Umfang des Eindeutigkeitsbereichs $\lambda$ und so darüber die Anzahl der unbekannten Integrationskonstanten $\alpha_0$, $\omega_0$ bzw. $\varphi_0$, welche berücksichtigt werden müssen, ausgewählt werden.

Die erste Variante der Kombination zeichnet sich durch eine einfache Differenzierung aus.

Die Messungen der Phase $\varphi(n)$, des radialen Abstandes $d_a(n)$ und der radialen Geschwindigkeit $v_a(n)$ werden mit einer Messfrequenz $f_M$ zu diskreten Zeitpunkten aufgenommen. Besonders vorteilhaft ist, dass alle Messungen aus dem zuvor beschrieben gleichen aufgenommenen FMCW/FSCW-Spektrum extrahiert werden, so dass eine zusätzliche zeitliche Synchronisation oder anderweitige Multi-Rate-Anpassungen nicht erforderlich sind. Im Folgenden werden daher die absoluten radialen Abstände $d_a(n)$, die radiale Geschwindigkeit $v_a(n)$ und die Phasenmessungen $\varphi(n)$ zu definierten Zeitpunkten $t_n$ gemessen.

Durch eine einfache Differenzbildung von der Phase $\varphi(n)$ und $\varphi(n-1)$ wird die Winkelgeschwindigkeit $\omega(n)$ bestimmt. Da die Winkelgeschwindigkeit $\omega(n)$ jedoch gemäß der vorher bestimmten Doppeldeutigkeit der Phasengeschwindigkeit $\lambda_\omega$ die reale Geschwindigkeit $v(n)$ nur begrenzt darstellen, wird diese mit der radialen gemessenen Geschwindigkeit $v_a(n)$ kombiniert, um eine eindeutige Lösung zu erhalten. Hierzu wird zunächst die Winkelgeschwindigkeit in die radiale Geschwindigkeit $v_\omega(n)$ durch die Verwendung der Messfrequenz $f_M$ und des Eindeutigkeitsbereichs der Phasengeschwindigkeit $\lambda_\omega$ umgerechnet:

$$v_\omega(n) = f_M \cdot \frac{\lambda_\omega}{2\pi} \cdot \omega(n). \qquad (11)$$

Um nun die Doppeldeutigkeiten zu vermeiden, wird ein Verschiebungsfaktor $K$ berechnet und gerundet. Hierzu wird die radiale Geschwindigkeit $v(n)$ und die Doppeldeutigkeit der Winkelgeschwindigkeit $\lambda_\omega$ verwendet:

$$K = \left\lfloor \frac{v(n) - v_\omega(n)}{\lambda_\omega} + 0.5 \right\rfloor. \qquad (12)$$

Mit Hilfe des Faktors kann nun die korrigierte Geschwindigkeit $v_{\omega c}(n)$ berechnet werden:

$$v_{\omega c}(n) = v_\omega(n) + K \cdot \lambda_\omega. \qquad (13)$$

Mittels einer Integration wird der relative Weg $x_r(n)$ berechnet. Dies wird mit Hilfe der Messfrequenz $f_M$ berechnet:

$$x_r(n) = \sum_{i=0}^{n} (v_{\omega c}(i) \cdot \frac{1}{f_M}). \qquad (14)$$

Mittels einer affinen Kombination kann nun der unbekannte Integrationskoeffizient $x_0(n)$ iterativ berechnet werden.

Diese soll exemplarisch für komplexere Verfahren, wie Kalman-Filterung, Bayesian-Filterung, und weitere bekannte statistische oder stochastische Filter stehen, welche alternativ verwendet werden können.
Für die affine Kombination wird folgender Ansatz gewählt:

$$x_0(n) = (x_0^-(n) + x_r(n)) \cdot \beta + d_a(n) \cdot (1 - \beta). \qquad (15)$$

Wobei der Faktor $\beta$ den Einfluss der radialen Abstandsmessung beschreibt. Mittels der bekannten und konstanten Standardabweichung der radialen Abstandsbestimmung $\sigma_a$ bestimmt sich hier über die Minimierung der Standardabweichung des Integrationsindexes $\sigma_0$:

$$\min! \sigma_0^2 = \beta^2 \cdot \sigma_0^- + (1 - \beta)^2 \cdot \sigma_a. \qquad (16)$$

Diese Minimierung wird durch die folgende Bedingung erreicht:

$$\Rightarrow 0 = \frac{\delta}{\delta \beta} \sigma_0^2 = -2\sigma_a + 2\beta(\sigma_r + \sigma_a). \qquad (17)$$

Durch Auflösen der Bedingung wird der unbekannte Faktor $\beta$ bestimmt.

$$\beta = \frac{2\sigma_r}{2(\sigma_r + \sigma_a)}. \qquad (18)$$

Durch das Einsetzen des bekannten Einflussfaktors $\beta$ wird die Integrationskonstante $x_0(n)$ und die Sicherheit der Lösung $\sigma_0(n)$ pro Messung iterativ bestimmt. Darüber hinaus kann die Sicherheit der Lösung berechnet und ausgegeben werden.

Als Startbedingung wird für die Integrationskonstante $x_0$ ein beliebiger Wert im Arbeitsbereich des Messsystems verwendet. Die Standardabweichung der Konstante $\sigma_0$ ist entsprechend groß zu wählen, so dass eine schnelle Initialisierung möglich ist.

Die zweite Variante der Kombination zeichnet sich durch eine zweifache Differenzierung aus. Dies hat entsprechend zwei unbekannte Integrationskonstanten zur Folge.

Zu der bisherigen Messung aus der ersten Variante wird hier die Phasenbeschleunigung $\alpha(n)$ mittels Differenzenbildung aus drei Phasen - Messungen $\varphi(n)$, $\varphi(n-1)$ und $\varphi(n-2)$ bestimmt. Durch die zweifache Differenzierung steigt der Eindeutigkeitsbereich $\lambda$ im Vergleich zur Winkelmessung deutlich. Gemäß dem Anwendungsfall und der Messrate $f_M$ ist der Eindeutigkeitsbereich $\lambda$ jedoch nicht ausreichend groß. Um diesen zu erweitern, ist eine zusätzliche Messung der radialen Beschleunigung *a(n)* notwendig. Hierfür kann zum einen die gemessenen radialen Komponenten differenziert werden, oder zum anderen ein zusätzlicher Beschleunigungssensor eingesetzt werden. In jedem Fall ist es erforderlich, dass diese Messung auf die Messzeitpunkte der Phasenbeschleunigung $\alpha(n)$ synchronisiert wird. Im Folgenden wird diese Vergleichsmessung als $a_a(n)$ bezeichnet.

Hierzu wird zunächst die Winkelbeschleunigung $\alpha(n)$ in die radiale Beschleunigung $a_\alpha(n)$ mittels der Verwendung der Messfrequenz $f_M$ und des Eindeutigkeitsbereichs der Phase $\lambda_\varphi$ umgerechnet:

$$a_\alpha(n) = f_M^2 \cdot \frac{\lambda_\alpha}{2\pi} \cdot \alpha(n). \qquad (19)$$

Um die Doppeldeutigkeiten zu vermeiden, wird ein Verschiebungsfaktor *K* berechnet und gerundet. Dieser wird analog zu den oben gezeigten Berechnungen zur Doppeldeutigkeit berechnet. Mit Hilfe des Faktors *K* wird die korrigierte radiale Beschleunigung $a_{\alpha c}(n)$ ermittelt. Mittels einer zweifachen Integration wird die relative Geschwindigkeit $v_r(n)$ und der relative Weg $x_r(n)$ mit Hilfe der Messfrequenz $f_M$ berechnet.

$$v_r(n) = \sum_{i=0}^{n} \left( a_{\alpha c}(i) \cdot \frac{1}{f_M} \right) + v_0,$$

$$x_r(n) = \sum_{i=0}^{n} \left( v_r(i) \cdot \frac{1}{f_M} \right) + x_0. \qquad (20)$$

Mittels einer affinen Kombination werden die unbekannten Integrationskoeffizienten $x_0$ und $v_0$ iterativ berechnet. Analog zur ersten Variante soll diese exemplarisch für komplexere Verfahren, wie Kalman-Filterung, Bayesian-Filterung, und weitere dem Fachmann bekannte statistische oder stochastische Filter stehen, welche alternativ verwendet werden können.

Um die beiden Integrationskonstanten zu bestimmen, wird hier ein zweistufiges Verfahren vorgeschlagen. In einem ersten Schritt wird hier die Integrationskonstante $v_0(n)$ iterativ bestimmt. Hierzu wird die gemessene radiale Geschwindigkeit *v(n)* und die relative Geschwindigkeit $v_r(n)$ mit der bereits beschriebenen affinen Kombination iterativ verwendet. In einem zweiten Schritt wird die zweite Integrationskonstante $x_0$ ermittelt. Diese wird aus dem radial gemessenen Abstand *d(n)* und dem relativen Weg $x_r(n)$ mittels der bereits beschriebenen affinen Kombination iterativ ermittelt.

Die dritte Variante der Kombination zeichnet sich durch eine dreifache Differenzierung aus. Dies hat folglich drei unbekannte Integrationskonstanten $x_0$, $v_0$ und $a_0$ zur Folge.

Zu den bisherigen Messungen aus den ersten beiden Varianten wird der Phasenruck *j(n)* mittels Differenzenbildung aus vier Phasen - Messungen $\varphi(n)$, $\varphi(n\text{-}1)$, $\varphi(n\text{-}2)$ und $\varphi(n\text{-}3)$ bestimmt. Durch die dreifache Differenzierung steigt der Eindeutigkeitsbereich $\lambda$ im Vergleich zur Winkelbeschleunigung erneut stark an. Dies führt zu einem großen Eindeutigkeitsbereich $\lambda$, welcher bei realisierbaren Messfrequenzen $f_M$ nahezu allen Anwendungen genügt. Daher wird von einer Ausweitung des Eindeutigkeitsbereiches $\lambda$ abgesehen.

Mittels einer dreifachen Integration wird die relative Beschleunigung $a_r(n)$, die relative Geschwindigkeit $v_r(n)$ und der relative Weg $x_r(n)$ mit Hilfe der bekannten Messfrequenz $f_M$ berechnet.

$$a_r(n) = \sum_{i=0}^{n} \left( j(i) \cdot \frac{1}{f_M} \right) + a_0,$$

$$v_r(n) = \sum_{i=0}^{n} \left( a_r(i) \cdot \frac{1}{f_M} \right) + v_0, \tag{21}$$

$$x_r(n) = \sum_{i=0}^{n} \left( v_r(i) \cdot \frac{1}{f_M} \right) + x_0.$$

Gemäß der Verwendung einer dreifach differenzierten Phase $\varphi(n)$ ist eine dreifache Integration notwendig. Dabei entstehen drei Integrationskonstanten $x_0$, $v_0$ und $a_0$. Analog zu den bisher beschriebenen Varianten müssten diese iterativ geschätzt werden, wobei erneut exemplarisch die affine Kombination verwendet wird, welche stellvertretend für komplexere statistische oder stochastische Verfahren steht.

Vorgeschlagen wird hier ein dreistufiger Ansatz. Dieser ermittelt in der ersten Stufe die Integrationskonstante $a_0$, durch die affine Kombination der radial gemessenen Beschleunigung $a_a(n)$ und der relativen Beschleunigung $a_r(n)$. In der zweiten Stufe wird die gemessene radiale Geschwindigkeit $v_a(n)$ mit der relativen Geschwindigkeit $v_r(n)$ kombiniert und ergibt so die zweite Integrationskonstante $v_0$. In der letzten Stufe wird der gemessene radiale Abstand $d_a(n)$ und der relative Abstand $x_r(n)$ mittels einer affinen Kombination verwendet, um die letzte Integrationskonstante $x_0$ iterativ zu bestimmen.

Der Ansatz zur Koppelung von relativer Sensorik mit Funkortungssystemen durch die Verwendung von additiver Sensorik ist bekannt. Diese additiven Sensoren sind in der Regel nicht ohne beträchtlichen Integrations- und Kostenaufwand mit dem bestehenden System kombinierbar. Im Folgenden wird eine bevorzugte Generierung von zwei Messwerten aus dem FMCW/FSCW Radar beispielhaft beschrieben. Da der radiale Abstand $d_a(n)$ und die radiale Geschwindigkeit $v_a(n)$ das gleiche Betragsspektrum als Messwertgrundlage haben, können diese als eine Messung betrachtet werden. Die Phasenmessung $\varphi(n)$ jedoch wird aus dem Phasenspektrum generiert und kann separat gewertet werden.

Eines der Grundprobleme der funkbasierten Ortung ist die Notwendigkeit der Sichtverbindung (*LOS*: Line Of Sight) zwischen dem Sender und dem Empfänger. Ist diese nicht gegeben, führt dies zu einer stark verfälschten Abstandsbestimmung $d_a(n)$, ohne dass diese erkannt wird. Im Folgenden wird ein neues Verfahren vorgeschlagen, welches direkt überprüfen kann, ob eine direkte Sichtverbindung (*LOS*) vorliegt:

Ist die Messung durch eine fehlerhafte Radarverbindung verfälscht, so kann dies erkannt werden, da die Fehlmessung nicht gleichmäßig ausfällt. Gemäß den vorher beschriebenen Varianten kann dies unterschiedlich realisiert werden. Beispielhaft wird hier eine Überprüfung für die Variante eins vorgeschlagen, wobei die korrigierte Geschwindigkeit $v_{\omega c}(n)$ mit der Phasenbeschleunigung $\alpha(n)$ verglichen wird. Die Phasenbeschleunigung $\alpha(n)$ wird mittels Differenzenbildung aus drei Phasenmessungen $\varphi(n)$, $\varphi(n-1)$ und $\varphi(n-2)$ bestimmt. Hierzu wird zunächst die Winkelbeschleunigung $\alpha(n)$ in die radiale Beschleunigung durch die Verwendung der Messfrequenz $f_M$ und des Eindeutigkeitsbereichs der Phasebeschleundigung $\lambda_\alpha$ umgerechnet:

$$a_\alpha(n) = f_M^2 \cdot \frac{\lambda_\alpha}{2\pi} \cdot \alpha(n). \tag{22}$$

Die korrigierte Geschwindigkeit $v_{\omega c}(n)$ wird differenziert und zu der Vergleichsmessung $a_V(n)$ umgeformt:

$$a_V(n) = v_{\omega c}(n) - v_{\omega c}(n-1). \tag{23}$$

Ist ein optimaler Empfang durch eine direkte Sichtverbindung (LOS) vorhanden, gilt, abgesehen von numerischem Rauschen:

$$LOS = \begin{cases} wahr & f\ddot{u}r & a_\alpha(n) + N \cdot \lambda_\alpha = a_V(n) \\ falsch & f\ddot{u}r & a_\alpha(n) + N \cdot \lambda_\alpha \neq a_V(n) \end{cases}. \qquad (24)$$

für alle $N \in \mathbf{Z}$ .

Wobei die Variable $N$ für jede beliebige ganze Zahlen steht, und somit der Eindeutigkeitsbereich der Phasenbeschleunigung $\lambda_a$ berücksichtigt. Kommt es zum Verlust der Sichtverbindung, werden beide Phasen verfälscht. Zusätzlich zu der fehlerhaften Phasenmessung hängt die Vergleichsmessung $a_v(n)$ $a_v(n)$ von der gemessenen radialen Geschwindigkeit $v_a(n)$ ab. Diese wird wiederum aus dem Betragsspektrum gewonnen und ist damit einer separaten Messung zuzuordnen. Daher verhält sich die Vergleichsmessung $a_v(n)$ bei dem Verlust der Sichtverbindung anders als die Phasenbeschleunigung $a_\alpha(n)$.

Bei dem Verlust der Sichtverbindung (NLOS) sind stark verfälschte Messwerte zu erwarten, welche in der Regel nicht verwendet werden können. Um den Fehler einzugrenzen, werden die folgenden Strategien vorgeschlagen:

Die einfachste Möglichkeit ist es, den falschen Messwert auszulassen. Dies reduziert allerdings die Messfrequenz $f_M$ und führt so zu einer starken Reduzierung des Eindeutigkeitsbereiches $\lambda$ der unterschiedlich differenzierten Phasenmessungen $\varphi(n)$ gemäß den obigen Beschreibungen.

Eine weitere Möglichkeit besteht darin, die bisherige Bewegung linear weiterzuführen. Dies lässt sich realisieren, indem der jeweils letzte als richtig erkannte Messwert übernommen wird. Gemäß der realen Bewegung führt dies zu einem über die Zeit kontinuierlich wachsenden Fehler.

Die Verwendung von bewegungserkennenden Algorithmen ermöglicht eine intelligente Erweiterung des zweiten Entwurfes. Durch die Analyse der letzten Bewegungen können die Algorithmen die nächsten Messungen schätzen. Der Fehler dieser Schätzung wird analog zur zweiten Strategie wachsen, jedoch signifikant kleiner ausfallen. Darüber hinaus besteht die Möglichkeit, den Fehler zu begrenzen.

Nahezu optimal ist das Vorhandensein von redundanten Messungen. Dabei können entweder mehrere parallel betriebene Funkortungssysteme oder Relativsensoren eingesetzt werden. Vermessen zwei gleichwertige Funksysteme einen Abstand, so kann die Messung verwendet werden, welche über eine Sichtverbindung verfügt. Verfügen beide über eine Sichtverbindung, kann die redundante Information zur Genauigkeitssteigerung verwendet werden. Relative Sensoren, z.B. Odometrie, inertale Messsysteme, können ebenfalls genutzt werden um die Phasenmessung $\varphi(n)$ zu ersetzen. Dabei wird die relative radiale Messung durch die Messung des additiven relativen Sensors ersetzt. Eine Korrektur durch ein absolutes System ist jedoch durch den Ausfall der Sichtverbindung nicht möglich. Daher steigt gemäß dem Driftverhalten der Sensoren der Fehler pro verwendete Messung der relativen Sensoren.

In Abhängigkeit von der verwendeten Strategie steigt der Fehler der Schätzung der Integrationskonstanten. Daher wird die Sicherheit der entsprechenden Integrationskonstanten um den zu erwartenden Fehler reduziert. Dies hat mehrere Vorteile.

So kann die nachfolgende Verarbeitung der Messwerte die gestiegenen Unsicherheiten erkennen und entsprechend berücksichtigen.

Die reduzierte Sicherheit erhöht den Einfluss der absoluten Messungen. Wird durch den Verlust der Sichtverbindung eine Fehlschätzung erreicht, so kann diese durch den erhöhten Einfluss schnell ausgeglichen werden.

Die Kenntnis der Bewegung bietet unter anderen die Vorteile einer verbesserten Genauigkeit durch entsprechende Rauschunterdrückung und die Möglichkeit verbesserter Energiesparoptionen.

Die Bewegungserkennung basiert auf der statistischen Auswertung der Messhistorie. Hierfür wird die Student t-Verteilung genutzt. In Abhängigkeit des Vertrauensintervalls, welches spezifisch entsprechend der Anwendung zu wählen ist, und der Anzahl der Messwerte $N$, ergibt sich die t-Verteilung $t$. Zur Analyse wird die Phasenmessung $\varphi(n)$ in unterschiedlichen Differenzierungsgraden verwendet. Für die Erkennung des Stillstandes gilt daher:

$$\text{Stillstand} = \begin{cases} wahr & f\ddot{u}r & \left| \sum_{i=0}^{N} v_\omega(i) \right| < \dfrac{t \cdot \sigma_\omega}{\sqrt{N}} \\ falsch & f\ddot{u}r & \left| \sum_{i=0}^{N} v_\omega(i) \right| > \dfrac{t \cdot \sigma_\omega}{\sqrt{N}} \end{cases}. \qquad (25)$$

Die Standardabweichung $\sigma_\omega$ bezeichnet hier das Rauschen der ermittelte Phasengeschwindigkeit $v_\omega(n)$. Weiterhin kann eine gleichmäßige Bewegung erkannt werden:

$$\text{lineare Bewegung} = \begin{cases} wahr & f\ddot{u}r \quad \left| \sum_{i=0}^{N} a_\alpha(i) \right| < \dfrac{t \cdot \sigma_\alpha}{\sqrt{N}} \\[3ex] falsch & f\ddot{u}r \quad \left| \sum_{i=0}^{N} a_\alpha(i) \right| > \dfrac{t \cdot \sigma_\alpha}{\sqrt{N}} \end{cases}. \qquad (26)$$

Die Standardabweichung $\sigma_\alpha$ bezeichnet hier das Rauschen der ermittelte Phasenbeschleunigung $a_\alpha$.
Außerdem besteht die Möglichkeit der Erkennung der gleichmäßigen Beschleunigung gemäß

$$\text{lineare Beschleunigung} = \begin{cases} wahr & f\ddot{u}r \quad \left| \sum_{i=0}^{N} j(i) \right| < \dfrac{t \cdot \sigma_j}{\sqrt{N}} \\[3ex] falsch & f\ddot{u}r \quad \left| \sum_{i=0}^{N} j(i) \right| > \dfrac{t \cdot \sigma_j}{\sqrt{N}} \end{cases}. \qquad (27)$$

Die Standardabweichung $\sigma_j$ bezeichnet dabei das Rauschen des ermittelten Phasenrucks $j(n)$.
Der zweite Aspekt, die Winkelbestimmung, wird analog zum ersten Aspekt, der Abstandsbestimmung, gelöst durch die Verwendung der Phasenmessung. Diese wird gemäß dem bereits beschriebenen Verfahren in unterschiedlichen Graden der Differenzierung aus mehreren Phasenmessungen $\varphi(n)$ berechnet. Der begrenzte Eindeutigkeitsbereichs $\lambda$ wird durch die Kombination mit der klassischen FMCW Abstands- und Geschwindigkeitsmessung wie bereits beschrieben erweitert, so dass die korrigierte Geschwindigkeit $v_{\omega c}(n)$, die korrigierte Beschleunigung $a_{\omega c}(n)$ und der Ruck $j(n)$ parallel auf beiden Antennen bzw. Sende- und Empfangseinrichtungen $SA_1$ und $SA_2$ gemessen werden kann.
Um die Messung einer Sende- und Empfangseinrichtung $SA$ eindeutig zuordnen zu können, ist im Folgenden der Index um die Nummer der Einrichtung bzw. Antenne erweitert.
Durch eine Differenzbildung der parallel gemessenen Größen wird die einfache, zweifache und die dreifache zeitliche Ableitung des Differenzabstandes bestimmt gemäß

$$\begin{aligned} \Delta \dot{d}_{P12}(n) &= v_{wc1}(n) - v_{wc2}(n) \\ \Delta \ddot{d}_{P12}(n) &= a_{\omega c1}(n) - a_{wc2}(n) \,. \\ \Delta \dddot{d}_{P12}(n) &= j_1(n) - j_2(n) \end{aligned} \qquad (28)$$

Um die Größen aus Gleichung (28) auf den Differenzabstand $\Delta d_{12}$ zurückzuführen, werden diese Größen gemäß dem Grad der Differenzierung integriert. Durch eine diskrete Integration ergibt sich der Zusammenhang zwischen dem Winkelruck, der Winkelbeschleunigung, der Winkelgeschwindigkeit und dem Winkel, wobei für den realen Fall die Summen gebildet werden gemäß

$$\Delta\ddot{d}_{P12}(n) = \sum_{i=0}^{n} \left(\Delta\dddot{d}_{P12}(i) \cdot \frac{1}{f_M}\right) + \Delta\ddot{d}_{0E},$$

$$\Delta\dot{d}_{P12}(n) = \sum_{i=0}^{n} \left(\Delta\ddot{d}_{P12}(i) \cdot \frac{1}{f_M}\right) + \Delta\dot{d}_{0E}, \qquad (29)$$

$$\Delta d_{P12}(n) = \sum_{i=0}^{n} \left(\Delta\dot{d}_{P12}(i) \cdot \frac{1}{f_M}\right) + \Delta d_{0E}.$$

Die Integrationskonstanten $\Delta d_{0E}$, $\Delta\dot{d}_{0E}$ bzw. $\Delta\ddot{d}_{0E}$ sind dabei unbekannt. Um diese unbekannten Integrationskonstanten $\Delta d_{0E}$, $\Delta\dot{d}_{0E}$ bzw. $\Delta\ddot{d}_{0E}$ zu schätzen, werden erneut die Messungen aus der FMCW/FSCW-Auswertung verwendet. Die Integrationskonstanten $\Delta d_{0E}$, $\Delta\dot{d}_{0E}$ bzw. $\Delta\ddot{d}_{0E}$ werden dabei in einem iterativen Prozess bestimmt. Hier kann auf bekannte statistische Filter, z.B. affine Kombination, Kalmanfilter oder Partikelfilter zurückgegriffen werden. Vorgeschlagen werden erneut drei Variationen mit der einfachen, zweifachen und der dreifachen zeitlichen Ableitung des Differenzabstandes aus den Phasenmessungen in Kombination mit den Differenzabstand $\Delta d_{12}$ bzw. deren ersten und deren zweiten zeitlichen Differenzen $\Delta\dot{d}_{12}$ und $\Delta\ddot{d}_{12}$ aus der klassischen FMCW/FSCW Abstandstandsbestimmung. Dabei können die oben beschreibenden drei Varianten analog angewandt werden. Exemplarisch wird daher im Folgenden nur die erste Variante der Kombination für eine 2D Anwendung mit zwei Sende- und Empfangseinheiten $SA_1$ und $SA_2$ und einem Objekt vollständig ausgeführt.

Die Messungen der Phase $\varphi(n)$, des radialen Abstandes $d_a(n)$ und der radialen Geschwindigkeit $v_a(n)$ werden parallel mit einer Messfrequenz $f_M$ zu diskreten Zeitpunkten für beide Antennen bzw. Sende- und Empfangseinheiten $SA_1$ und $SA_2$ zu definierten Zeitpunkten $t_n$ aufgenommen.

Durch eine einfache Differenzbildung der Phase $\varphi(n)$ und $\varphi(n-1)$ zuerst Winkelbeschleunigung der empfangenden Phase $\omega(n)$ pro Antenne bzw. Sende- und Empfangseinrichtung $SA_1$ und $SA_2$ bestimmt. Da die Winkelgeschwindigkeit $\omega(n)$ jedoch gemäß der im ersten Aspekt der Erfindung bestimmten Doppeldeutigkeit $\lambda_\omega$ die reale Geschwindigkeit $v(n)$ nur begrenzt darstellt, wird diese mit der gemessenen, radialen Geschwindigkeit $v_a(n)$ der entsprechenden Einrichtung kombiniert, um eine eindeutige Lösung zu erhalten. Hierzu wird zunächst die Winkelgeschwindigkeit $\omega(n)$ in die radiale Geschwindigkeit $v_\omega(n)$ durch die Verwendung der Messfrequenz $f_M$ und des Eindeutigkeitsbereichs der Phasengeschwindigkeit $\lambda_\omega$ umgerechnet gemäß

$$v_\omega(n) = f_M \cdot \frac{\lambda_\omega}{2\pi} \cdot \omega(n). \qquad (30)$$

Um nun die Doppeldeutigkeiten zu vermeiden, wird ein Verschiebungsfaktor $K$ berechnet und gerundet. Hierzu wird die radiale Geschwindigkeit $v(n)$ und die Doppeldeutigkeit der Winkelgeschwindigkeit $\lambda_\omega$ verwendet:

$$K = \left\lfloor \frac{v(n) - v_\omega(n)}{\lambda_\omega} + 0.5 \right\rfloor. \qquad (31)$$

Mit Hilfe des Faktors $K$ kann nun die korrigierte Geschwindigkeit $v_{\omega c}(n)$ pro Antenne bzw. Sende- und Empfangseinrichtung $SA_1$ und $SA_2$ berechnet werden:

$$v_{\omega c}(n) = v_\omega(n) + K \cdot \lambda_\omega. \qquad (32)$$

Durch die Differenzbildung der Messungen der beiden Einrichtungen $SA_1$ und $SA_2$ wird die zeitliche Änderung der Differenzlänge $\Delta d_{P12}$ berechnet:

$$\Delta \dot{d}_{P12}(n) = v_{wc1}(n) - v_{wc2}(n) \tag{33}$$

Mittels einer Integration wird die relative Differenzänderung $\Delta d_r(n)$ berechnet. Diese wird mit Hilfe der Messfrequenz $f_M$ berechnet:

$$\Delta d_r(n) = \sum_{i=0}^{n} \left( \Delta \dot{d}_r(i) \cdot \frac{1}{f_M} \right) \tag{34}$$

Mittels einer affinen Kombination kann nun der unbekannte Integrationskoeffizient $\Delta d_0(n)$ iterativ berechnet werden. Dies steht exemplarisch für komplexere Verfahren, wie Kalman-Filterung, Bayesian-Filterung und weitere bekannte statistische oder stochastische Filter, welche alternativ verwendet werden können.
Für die affine Kombination wird folgender Ansatz gewählt:

$$\Delta d_0(n) = (\Delta d_0(n) + \Delta d_r(n)) \cdot \beta + \Delta d_a(n) \cdot (1 - \beta) \, , \tag{35}$$

wobei ein Einflussfaktor $\beta$ einen Einfluss der radialen Abstandsmessung beschreibt und $\Delta d_a(n)$ die gemessene Abstandsdifferenz aus dem klassischen FMCW/FSCW-Verfahren. Mit der bekannten und konstanten Standardabweichung der radialen Abstandsbestimmung $\sigma_a$ bestimmt sich die Integrationskonstante über die Minimierung der Standardabweichung des Integrationsindexes $\sigma_0$ gemäß

$$\min! \sigma_0^2 = \beta^2 \cdot \sigma_0^- + (1 - \beta)^2 \cdot \sigma_a. \tag{36}$$

Diese Minimierung (36) wird durch den folgenden Ansatz erreicht:

$$\Rightarrow 0 = \frac{\delta}{\delta\beta} \sigma_0^2 = -2\sigma_a + 2\beta(\sigma_r + \sigma_a). \tag{37}$$

Durch Auflösen der Bedingung (37) wird der unbekannte Einflussfaktor $\beta$ bestimmt.

$$\beta = \frac{2\sigma_r}{2(\sigma_r + \sigma_a)}. \tag{38}$$

Durch Einsetzen des so bestimmten Einflussfaktors $\beta$ wird die Integrationskonstante $\Delta d_0(n)$ und die Sicherheit der Lösung $\sigma_0(n)$ pro Messung iterativ bestimmt. Darüber hinaus kann die Sicherheit der Lösung berechnet und ausgegeben werden.

Als Startbedingung wird für die Integrationskonstante $x_0$ ein beliebiger Wert im Arbeitsbereich des Messsystems verwendet.

Die Standardabweichung der Konstante $\sigma_0$ ist entsprechend groß zu wählen, so dass eine schnelle Initialisierung möglich ist.

Über die Trigonometrie lässt sich der Eingangswinkel $\gamma_{ein}(n)$ berechnen zu

$$\gamma_{ein}(n) = \arccos\left(\frac{\Delta d_0(n)}{d_{SA1SA2}}\right). \tag{39}$$

Durch die Verwendung der Differenzen lassen sich neben dem Eingangswinkel $\gamma_{ein}$ auch die Eingangswinkelgeschwindigkeit $\omega_{ein}(n)$, die Eingangswinkelbeschleunigung $\alpha_{ein}(n)$ und den Eingangswinkelruck $j_{ein}(n)$ bestimmen:

$$\dot{\gamma}_{ein}(n) = \arccos\left(\frac{\Delta \dot{d}_0(n)}{d_{SA1SA2}}\right),$$

$$\ddot{\gamma}_{ein}(n) = \arccos\left(\frac{\Delta \ddot{d}_0(n)}{d_{SA1SA2}}\right), \quad . \tag{40}$$

$$\dddot{\gamma}_{ein}(n) = \arccos\left(\frac{\Delta \dddot{d}_0(n)}{d_{SA1SA2}}\right).$$

Ein dritter Aspekt besteht in einer Ortung des Objektes O bzw. des daran befestigten Transponders T durch die Verwendung des berechneten radialen Abstands d aus der Integrationskonstante $x_0(n)$ gemäß dem ersten Aspekt und des gemäß dem zweiten Aspekt berechneten Eingangswinkels $\gamma_{ein}(n)$, um die Position des Objektes O in Polarkoordinaten zu beschreiben. Dieses kann sowohl für eine eindimensionale, eine zweidimensionale als auch für eine dreidimensionale Ortung realisiert werden. Beispielhaft wird im Folgenden eine 2D-Ortung mit dem Objekt O und zwei Sende- und Empfangseinrichtungen $SA_1$ und $SA_2$ beschrieben.

Gemäß dem ersten Aspekt werden somit die radialen Abstände $d_1(n)$ und $d_2(n)$ und gemäß dem zweiten Aspekt wird der Eingangswinkel $\gamma_{ein}(n)$ zwischen dem Objekt O und den zwei Sende- und Empfangseinrichtungen $SA_1$ und $SA_2$ bestimmt, um diese Größen gemäß dem dritten Aspekt zu einer Positionsbestimmung des Objektes O bzw. des Transponders T relativ zu den beiden den zwei Sende- und Empfangseinrichtungen $SA_1$ und $SA_2$ zu bestimmen.

Im ersten Schritt wind die Seitenhalbierende $s_a$ zwischen den gemessenen radialen Abständen $d_1(n)$ und $d_2(n)$ berechnet gemäß

$$s_a(n) = \frac{\sqrt{2(d_1(n)^2 + d_2(n)^2) - d_{SA1SA2}{}^2}}{2} \tag{41}$$

Der Abstand zwischen den zwei Sende- und Empfangseinrichtungen $SA_1$ und $SA_2$ wird hierbei durch $d_{SA1SA2}$ bezeichnet.

Im zweiten Schritt wird ein polares Koordinatensystem konstruiert, welches den Ursprung im räumlichen Mittelpunkt M zwischen den Koordinaten der zwei Sende- und Empfangseinrichtungen $SA_1$ und $SA_2$ hat. Mittels des zuvor bestimmten Eingangswinkels $\gamma_{ein}(n)$ wird die Position nun in Polarkoordinaten beschrieben.

$$P_{Pol}(n) = P(s_a(n), \gamma_{ein}(n)) \qquad (42)$$

Der Übergang von Polarkoordinaten zu den kartesischen Koordinatensystem wird beschrieben durch

$$x(n) = s_a(n) \cdot \cos(\gamma_{ein}(n))$$
$$y(n) = s_a(n) \cdot \sin(\gamma_{ein}(n)) \qquad \cdot \qquad (43)$$

Die Position kann abschließend in kartesischen Koordinaten beschrieben werden durch

$$P_{Kar}(n) = P(x(n), y(n)) \; . \qquad (44)$$

**Patentansprüche**

1. Messvorrichtung mit einer Sende- und Empfangseinrichtung (*SA*) zur Bestimmung eines Abstands (*d*), einer Geschwindigkeit (*v*), einer Beschleunigung (*a*) und/oder eines Rucks (*j*), eines Eingangswinkels ($\gamma_{ein}$), einer Eingangswinkelgeschwindigkeit ($\omega_{ein}$) und/oder einer Eingangswinkelbeschleunigung ($\alpha_{ein}$) und/oder Eingangswinkelruck ($j_{ein}$) zwischen zumindest einer Sende- und Empfangseinrichtung (*SA*) und zumindest einem Objekt (*O*),

   - wobei die Sende- und Empfangseinrichtung (*SA*) so ausgestaltet und/oder gesteuert ist, dass sie Signale (*so*) mit unterschiedlichen Frequenzen (*f*) zu einem Objekt (*O*) und/oder einem als Transponder (*T*) ausgebildeten Objekt sendet,
   - und von dem Objekt (*O*) passiv reflektierte Signale (*si*), und/oder aktive durch einen Transponder (*T*) verstärkte Signale (*si*) und/oder aktive durch einen Transponder (*T*) modulierte Signale (*si*) empfängt,
   - wobei die Messvorrichtung das gesendete Signale (*so*) und das empfangene Signal (*si*) so verarbeitet, dass der Abstand (*d*), die Geschwindigkeit (*v*) und/oder die Phase ($\varphi$), der Eingangswinkel ($\gamma_{ein}$), die Eingangswinkelgeschwindigkeit ($\omega_{ein}$) die Eingangswinkelbeschleunigung ($\alpha_{ein}$) und/oder der Eingangswinkelruck ($j_{ein}$) bestimmt oder gemessen wird, **dadurch gekennzeichnet, dass** die Messvorrichtung ausgelegt und/oder gesteuert ist,
   a1) durch Differenzbildung mehrerer Messungen der Phasen ($\varphi$) als einer Messgröße die Phasengeschwindigkeit ($\omega$), die Phasenbeschleunigung ($\alpha$) und/oder den Phasenruck (*j*) als zumindest eine Berechnungsgröße zu berechnen,
   a2) und/oder durch eine Differenzbildung mehrerer Messungen und/oder Berechnungsgrößen zwischen zumindest zwei Sende- und Empfangseinrichtungen und/oder zumindestens zwei Antennen als zumindest eine Berechnungsgröße zu berechnen,
   b1) zumindest eine dieser Berechnungsgrößen ($\omega$, $\alpha$, j, $\omega_{ein}$, $\alpha_{ein}$, $j_{ein}$) durch eine Umformung in die radiale Geschwindigkeit ($v_\omega$), die radiale Beschleunigung ($a_\alpha$), den radialen Ruck ($j_j$), die Eingangswinkelgeschwindigkeit ($\omega_{ein}$), die Eingangswinkelbeschleunigung ($\alpha_{ein}$) und/oder den Eingangswinkelruck ($j_{ein}$) in Bezug zu dem gemessenen Abstand (*d*), zu der gemessenen Geschwindigkeit (*v*), zu dem gemessenden Differenzabstand ($\Delta d_{12}$) und/oder zu der gemessenen Differenzgeschwindigkeit ($\Delta v_{12}$) als Bezugsgrößen zu stellen
   b2) und/oder den gemessenen Abstand (*d*), die gemessene Geschwindigkeit (*v*), den gemessenen Differenzabstand ($\Delta d_{12}$) und/oder die gemessenen Differenzgeschwindigkeit ($\Delta v_{12}$) als einer Messgröße durch eine Umformung in den Phasenzustand ($\varphi_d$), die Phasengeschwindigkeit ($\omega_v$), die Phasenbeschleunigung ($\alpha_a$), den Eingangswinkel ($\gamma_{ein}$), die Eingangswinkelgeschwindigkeit ($\omega_{ein}$) und/oder die Eingangswinkelbeschleunigung ($\alpha_{ein}$) in Bezug zu einer der Berechnungsgrößen ($\omega$, $\alpha$, j, $\omega_{ein}$, $\alpha_{ein}$, $j_{ein}$) als Bezugsgrößen zu stellen,
   c) eine Kombination der Bezugsgrößen und/oder der Berechnungsgrößen zur Ermittlung von zumindest einer Integrationskonstante ($x_0$, $v_0$, $a_0$, $\gamma_0$, $\omega_0$, und/oder $\alpha_0$) zu verwenden, welche bei einer Rückintegration der

Phasengeschwindigkeit ($\omega$), der Phasenbeschleunigung ($\alpha$), des Phasenrucks ($j$), der Eingangswinkelgeschwindigkeit ($\omega_{ein}$), der Eingangswinkelbeschleunigung ($\alpha_{ein}$) und/oder des Eingangswinkelrucks ($j_{ein}$) einsetzbar ist.

2. Vorrichtung nach Anspruch 1, die ausgelegt und/oder gesteuert ist, den gemessenen Abstand ($d$) und die gemessene Geschwindigkeit ($v$) zur Erweiterung eines Eindeutigkeitsbereichs ($\lambda$) der Phasengeschwindigkeit ($\omega$), der Phasenbeschleunigung ($\alpha$), des Phasenrucks ($j$), der Eingangswinkelgeschwindigkeit ($\omega_{ein}$), der Eingangswinkelbeschleunigung ($\alpha_{ein}$) und/oder des Eingangswinkelrucks ($j_{ein}$) zu verwenden.

3. Vorrichtung nach Anspruch 1 oder 2, die ausgelegt und/oder gesteuert ist, ein Vorhandensein einer Sichtverbindung ($LOS$) zwischen der Sende- und Empfangseinrichtung ($SA$) und dem passiv reflektierenden Objekt ($O$) oder dem aktiv zurücksendenden Transponder ($T$) durch einen Vergleich zwischen der Phasenmessung ($\varphi$) und der Abstandsmessung ($d$) bzw. der Geschwindigkeitsmessung ($v$) zu überprüfen.

4. Vorrichtung nach einem vorstehenden Anspruch 1 oder 2, die ausgelegt und/oder gesteuert ist, eine statistische Auswertung der berechneten Phasengeschwindigkeit ($\omega$), Phasenbeschleunigung ($\alpha$) und/oder des Phasenrucks ($j$) zur Ermittlung von Bewegungsformen, insbesondere Stillstand, linearer Bewegung und/oder linearer Beschleunigung zu verwenden.

5. Vorrichtung nach einem vorstehenden Anspruch 1 oder 2, die ausgelegt und/oder gesteuert ist, eine statistische Auswertung der berechneten Eingangswinkelgeschwindigkeit ($\omega_{ein}$), Winkeleingangsbeschleunigung ($\alpha_{ein}$) und/oder des Winkeleingangsrucks ($j_{ein}$) zur Ermittlung von Bewegungsformen, insbesondere Stillstand, Rotation und/oder Rotationsbeschleunigung zu verwenden.

6. Vorrichtung nach einem vorstehenden Anspruch 1 bis 5, die ausgelegt und/oder gesteuert ist, eine Position (P) des Transponders ($T$) aus zumindest einem solchen radialen Abstand ($d_1(n)$, $d_2(n)$) und zumindest einem solchen Eingangswinkel ($\gamma_{ein}(n)$) zwischen dem Transponder ($T$) und den zwei Sende- und Empfangseinrichtungen ($SA_1$, $SA_2$) zu bestimmen.

7. Messverfahren zur Bestimmung eines Abstands ($d$), einer Geschwindigkeit ($v$), einer Beschleunigung ($a$) und/oder eines Rucks ($j$), eines Eingangswinkels ($\gamma_{ein}$), einer Eingangswinkelgeschwindigkeit ($\omega_{ein}$) und/oder einer Eingangswinkelbeschleunigung ($\alpha_{ein}$) und/oder Eingangswinkelruck ($j_{ein}$) zwischen zumindest einer Sende- und Empfangseinrichtung ($SA$) und zumindest einem Objekt ($O$),

   - wobei mit der Sende- und Empfangseinrichtung ($SA$) so ausgestaltet und/oder gesteuert ist, dass sie Signale ($so$) mit unterschiedlichen Frequenzen ($f$) zu einem Objekt ($O$) und/oder einem als Transponder ($T$) ausgebildeten Objekt gesendet werden,
   - und mit einer Sende- und Empfangseinrichtung ($SA$) von dem Objekt ($O$) passiv reflektierte Signale ($si$), und/oder aktive durch einen Transponder ($T$) verstärkte Signale ($si$) und/oder aktive durch einen Transponder ($T$) modulierte Signale ($si$) empfangen werden,
   - wobei das gesendete Signale ($so$) und das empfangene Signal ($si$) so verarbeitet werden, dass der Abstand ($d$), die Geschwindigkeit ($v$) und/oder die Phase ($\varphi$), der Eingangswinkel ($\gamma_{ein}$), die Eingangswinkelgeschwindigkeit ($\omega_{ein}$) die Eingangswinkelbeschleunigung ($\alpha_{ein}$) und/oder der Eingangswinkelruck ($j_{ein}$) bestimmt oder gemessen werden,

   **dadurch gekennzeichnet, dass**

   - durch Differenzbildung mehrerer Messungen der Phasen ($\varphi$) als einer Messgröße die Phasengeschwindigkeit ($\omega$), die Phasenbeschleunigung ($\alpha$) und/oder den Phasenruck ($j$) als zumindest eine Berechnungsgröße berechnet werden,
   - und/oder durch eine Differenzbildung mehrere Messungen und/oder Berechnungsgrößen zwischen zumindest zwei Sende- und Empfangseinrichtungen und/oder zumindestens zwei Antennen als zumindest eine Berechnungsgröße berechnet werden,
   - die Berechnungsgrößen durch eine Umformung in die radiale Geschwindigkeit ($v_\omega$), die radiale Beschleunigung ($a_\alpha$), den radialen Ruck ($j_j$), die Eingangswinkelgeschwindigkeit ($\omega_{ein}$), die Eingangswinkelbeschleunigung ($\alpha_{ein}$) und/oder den Eingangswinkelruck ($j_{ein}$) als Bezug zu dem gemessenen Abstand ($d$), zu der gemessenen Geschwindigkeit ($v$), zu dem gemessenden Differenzabstand ($\Delta d_{12}$) und/oder zu der gemessenen Differenzgeschwindigkeit ($\Delta v_{12}$) als Bezugsgrößen

- und/oder den gemessenen Abstand ($d$), die gemessene Geschwindigkeit ($v$), den gemessenen Differenzabstand ($\Delta d_{12}$) und/oder die gemessenen Differenzgeschwindigkeit ($\Delta v_{12}$) als einer Messgröße durch eine Umformung in den Phasenzustand ($\varphi_d$), die Phasengeschwindigkeit ($\omega_v$), die Phasenbeschleunigung ($\alpha_a$), den Eingangswinkel ($\gamma_{ein}$), die Eingangswinkelgeschwindigkeit ($\omega_{ein}$) und/oder die Eingangswinkelbeschleunigung ($\alpha_{ein}$) als Bezugsgrößen in Bezug zu einer der Berechnungsgrößen ($\omega$, $\alpha$, j, $\omega_{ein}$, $\alpha_{ein}$, $j_{ein}$) gestellt werden,
- eine Kombination der Bezugsgrößen und/oder der Berechnungsgrößen zur Ermittlung von zumindest einer Integrationskonstante ($x_0$, $v_0$, $a_0$, $\gamma_0$, $\omega_0$, und/oder $\alpha_0$) verwendet wird, welche bei einer Rückintegration der Phasengeschwindigkeit ($\omega$), der Phasenbeschleunigung ($\alpha$), des Phasenrucks ($j$), der Eingangswinkelgeschwindigkeit ($\omega_{ein}$), der Eingangswinkelbeschleunigung ($\alpha_{ein}$) und/oder des Eingangswinkelrucks ($j_{ein}$) verwendet wird.

8. Verfahren nach Anspruch 7, bei den der gemessenen Abstand ($d$) und/oder die gemessene Geschwindigkeit ($v$) zur Erweiterung eines Eindeutigkeitsbereichs ($\lambda$) der Phasengeschwindigkeit ($\omega$), der Phasenbeschleunigung ($\alpha$), des Phasenrucks ($j$), der Eingangswinkelgeschwindigkeit ($\omega_{ein}$), die Eingangswinkelbeschleunigung ($\alpha_{ein}$) und/oder dem Eingangswinkelruck ($j_{ein}$) verwendet werden.

9. Verfahren nach Anspruch 7 oder 8, bei dem ein Vorhandensein einer Sichtverbindung (LOS) zwischen der Sende- und Empfangseinrichtung ($SA$) und dem passiv reflektierenden Objekt ($O$) oder dem aktiv zurücksendenden Transponder (T) durch einen Vergleich zwischen der Phasenmessung ($\varphi$) und der Abstandsmessung ($d$) bzw. der Geschwindigkeitsmessung ($v$) überprüft wird.

10. Verfahren nach einem vorstehenden Anspruch 7 bis 9, bei dem eine statistische Auswertung der berechneten Phasengeschwindigkeit ($\omega$), Phasenbeschleunigung ($\alpha$) und/oder des Phasenrucks ($j$) zur Ermittlung von Bewegungsformen, insbesondere Stillstand, linearer Bewegung und/oder linearer Beschleunigung verwendet wird.

11. Verfahren nach einem vorstehenden Anspruch 7 bis 10, bei dem eine statistische Auswertung der berechneten Eingangswinkelgeschwindigkeit ($\omega_{ein}$), Winkeleingangsbeschleunigung ($\alpha_{ein}$) und/oder des Winkeleingangsrucks ($j_{ein}$) zur Ermittlung von Bewegungsformen, insbesondere Stillstand, Rotation und/oder Rotationsbeschleunigung verwendet wird.

12. Verfahren nach einem vorstehenden Anspruch 7 bis 11, bei dem eine Position (P) des Transponders (T) aus zumindest einem solchen radialen Abstand ($d_1(n)$, $d_2(n)$) und zumindest einem solchen Eingangswinkel ($\gamma_{ein}(n)$) zwischen dem Transponder ($T$) und den zwei Sende- und Empfangseinrichtungen ($SA_1$, $SA_2$) und/oder den zwei Antennen bestimmt wird.

**Fig. 1**

**Fig. 2**

**Fig. 3**

Europäisches
Patentamt

European
Patent Office

Office européen
des brevets

**ERKLÄRUNG**

die nach Regel 63 des Europäischen Patentübereinkommens für das weitere Verfahren als
europäischer Recherchenbericht gilt

**Nummer der Anmeldung**

EP 09 00 2801

| Die Recherchenabteilung ist der Auffassung, daß die vorliegende Patentanmeldung den Vorschriften des EPÜ in einem solchen Umfang nicht entspricht, daß sinnvolle Ermittlungen über den Stand der Technik auf der Grundlage aller Patentansprüche nicht möglich sind. | **KLASSIFIKATION DER ANMELDUNG (IPC)** |
|---|---|
| Grund: | INV.<br>G01S13/84 |

Ohne Berücksichtigung des "und/oder"-Begriffs in den Referenzzeichen (S. 33, Z. 26) und ohne Berücksichtigung des "und/oder"-Begriffs im Merkmal "Messvorrichtung ausgelegt und/oder gesteuert" (2x in Anspruch 1 bzw. 7, z.B. S. 32, Z. 13 und 28), enthalten die unabhängigen Anprüche 1 und 7 jeweils 19 Mal (!) den Begriff "und/oder" der jeweils 2, 3, 4, 6, 7 oder gar 8 Merkmale verbindet, die in 15 Kombinations-'Konglomerate' zusammengefasst werden können. Damit umfassen allein die unabhängigen Ansprüche jeweils mindestens $255 \times 3 \times 3 \times 127 \times 7 \times 3 \times 3 \times 3 \times 63 \times 15 \times 3 \times 15 \times 63 \times 3 \times 63 = 1,8595318 \times 10^{15}$ (also knapp 2 Billiarden oder knapp 2000 Billionen!) mögliche Merkmalskombinationen. Damit sind die Ansprüche nicht deutlich gefasst (Art. 84 EPÜ; Schutzumfang angesichts dieser Vielzahl von Möglichkeiten nicht ermittelbar). Zudem wird bezweifelt, dass alle diese Kombinationen von der Beschreibung gestützt sind (Art. 84 EPÜ) oder nacharbeitbar sind (Art. 83 EPÜ). Somit erfüllen die Ansprüche so wenig die Erfordernisse des EPÜ, dass keine sinnvolle Recherche möglich ist (R. 63 EPÜ, RiLi B-VIII, 3 ii) oder C-III, 5).

Der Anmelder wird darauf hingewiesen, dass im Zuge der Prüfung eine Recherche durchgeführt werden kann, sollten die einer Erklärung gemäss Regel 63 EPÜ zugrundeliegenden Mängel behoben worden sein (Vgl. EPA-Richtlinien C-VI, 8.2).
-----

| Recherchenort | Abschlußdatum | Prüfer |
|---|---|---|
| München | 29. April 2009 | Schmelz, Christian |

EPO FORM 1504 (P04F39)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10336084 A1

**In der Beschreibung aufgeführte Nicht-Patentliteratur**

- **M. Vossiek ; A. Urban ; S.Max ; P. Gulden.** Inverse Synthetic Aperture Secondary Radar Concept for Precise Wireless Positioning. *IEEE Transaction on Microwave Theory and Techniques,* 2007, vol. 55, 2447-2453